# EUROPEAN PATENT SPECIFICATION

(11) **EP 1 777 043 B1**
(45) Date of publication and mention of the grant of the patent: **23.07.2008**
(21) Application number: 05109820.0
(22) Date of filing: 21.10.2005
(51) Int. Cl.: B25J 9/00

(54) **An arm part of an industrial robot as well as an industrial robot provided therewith**
Roboterarmteil sowie Industrieroboter mit einem solchen Armteil
Partie de bras de robot ainsi qu'un robot industriel pourvu d'une telle partie de bras

(43) Date of publication of application: 25.04.2007
(73) Proprietor: ABB AB, 721 83 Västerås (SE)
(72) Inventor: Mikaelsson, Pierre, 723 50 Västerås (SE); Toresson, Bo, 731 32 Köping (SE); Fors, Michael, 722 46 Västerås (SE); Thulin, Mats, 723 36 Västerås (SE); Hellberg, Magnus, 723 36 Västerås (SE)

(56) References cited:
- WO-A-96/31325
- DE-A1- 10 245 899
- DE-A1- 19 916 706

## Description

### TECHNICAL FIELD OF THE INVENTION AND PRIOR ART

The present invention relates to the design of an industrial robot. It relates more particularly to the design of an arm part of the manipulator of an industrial robot, and such an arm part in the form of the lower arm will hereinafter be discussed without restricting the scope of the invention thereto.

The lower arm of an industrial robot is the arm interconnecting the so-called second and third axis of an industrial robot, in which these axis have an horizontal extension when the robot stands on the ground (an horizontal surface). The invention relates to all types of industrial robots having such a lower arm, such as for spot welding, milling, packaging and other types of load handling and so on.

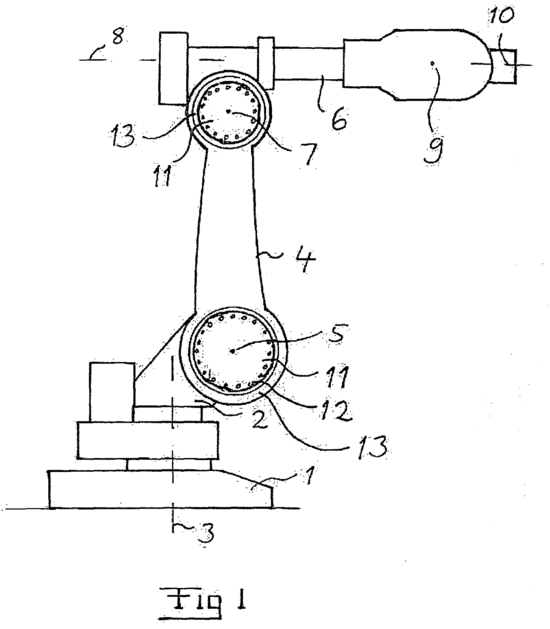

Such a lower arm already known is illustrated in appended fig 1 showing an industrial robot provided therewith. This robot has a base 1 for mounting it on a floor or the like and a frame 2 rotatably connected to the base about a first vertical axis 3 of rotation. The lower arm 4 is in its turn rotatably connected to the frame 2 about a horizontal second axis 5 of rotation and connects rotatably to an upper arm 6 about a horizontal third axis 7 of rotation. The robot also includes a fourth, fifth and sixth axis of rotation schematically indicated by 8, 9 and 10, respectively.

However, it is within the scope of the present invention that the industrial robot does not have all these axis of rotation, but it is only necessary that it has said second and third axis of rotation, and one or more of the others may be left out.

The lower arm 4 has at each end thereof means for connecting the arm to a gear, and these means are for the robot shown in fig 1 obtained by flat portions 11 provided with holes and bolts for securing the arm to the gear in question. The arm has to have a certain stiffness in the end regions thereof, and this may be obtained by making said flat portions 11 thick enough, but that would add substantially to the weight of this lower arm, so that stiffening is instead or as a complement thereto obtained by providing an outer material rim 13 surrounding said flat portions. This material rim 13 is combined with a certain thickness of said portions for obtaining the stiffness required.

A different kind of design of a robot arm part is known from WO-A-9631325, which discloses a circular array of blind holes as connecting means for connecting the arm part to a gear, said array being located around a dome-shaped portion for stiffening the end region of the arm part.

### SUMMARY OF THE INVENTION

The object of the present invention is to provide an arm part of a manipulator of an industrial robot being improved with respect to such arm parts already known.

This object is according to the invention obtained by providing an arm part of a manipulator of an industrial robot as defined in claim 1..

This satisfies the ongoing attempt to try to save weight while maintaining or even increasing the stiffness of different parts of an industrial robot, such as a said arm part. By moving the connecting means towards the periphery of the arm part and by that allowing the stiffening means to be moved away from the periphery a certain stiffness may be obtained with less material. The reduction of weight for obtaining a predetermined stiffness may be made particularly important when at least a part of said stiffening means is designed to form a hollow portion of the arm part at said at least one end, which constitutes an embodiment of the present invention. The location of the connecting means closer to the periphery of the arm part than the stiffening means is the key to obtain the possibility to make said stiffening means hollow.

Additionally, said connecting means comprises through holes arranged in said flat arm portions for connecting the arm by elongated connecting members, such as bolts or the like, to a said gear.

Moreover at least one aperture is arranged in the hollow structure of said stiffening means for providing access to said connecting members located most distant to the end of the arm part with respect to the longitudinal extension of the arm part. This makes it possible to arrange some of the connecting members "internally" of the stiffening means and still tightening and loosening these connecting members for obtaining the required stability of the connection to the gear.

According to an embodiment of the invention said part of said connecting means has an arc-like extension located at the outer part of the arm part with respect to the longitudinal extension of the arm part and surrounding said stiffening means located internally with respect to said arc, and said arc-like extension of said connecting means part may be circular. This means that the connecting means, have changed place with the stiffening rim in the lower arm already known shown in fig 1, which opens up for a greater freedom to design the stiffening means located internally thereof, such as making them hollow.

According to another embodiment of the invention said connecting means extend substantially according to a circle as seen in said direction of the axis of rotation of said gear, and said stiffening means is located inside said circle at least at the outer part of the arm part with respect to the longitudinal extension of the arm part. This constitutes a favourable way of securing the arm part to the gear while making it possible to design the stiffening means for obtaining a high stiffness with little material thanks to the arrangement thereof inside said circle at least at the outer part of the arm part.

According to another embodiment of the invention said connecting means comprises substantially flat arm portions to be secured to a said gear and belonging to said part of said connecting means located closer to the periphery of the arm part than said stiffening means. Such flat arm portions are suitable for reliably securing the arm part to the gear.

According to another embodiment of the present invention said stiffening means forms together with other portions of the arm part an arm part being hollow over substantially the entire length thereof, which will make the arm part lighter for a predetermined stiffness thereof than would it have been solid, and the hollow arm portions may advantageously be prolonged to form the stiffening means at each arm end thanks to the arrangement of the connecting means closer to the periphery of the arm part.

According to another embodiment of the invention both ends of the arm part are provided with connecting means at least a part of which being located closer to the periphery of the arm part than said stiffening means while at least partly surrounding the stiffening means as seen in the direction of the axis of rotation of said gear for benefiting to an optimum of the advantages of the invention for the arm part so constructed.

According to another embodiment of the invention said arm part is a lower arm of an industrial robot.

The invention also relates to an industrial robot provided with an arm part according to the invention. Such an industrial robot may be made lighter for a certain stiffness, so that costs may be saved for example by reducing the need of material and/or of motor torques.

The design of an arm part of the robot according to the invention allowing the robot to be made lighter for a certain stiffness results in the possibility to provide and industrial robot according to an embodiment of the invention adapted to carry a tool and/or a load with a weight exceeding 100 kg, in which the motor and the gear box arranged at the so-called second axis, i.e. the horizontal axis closest to the base of the robot when arranging the robot on a horizontal surface, are dimensioned, while considering the weight and design of the robot parts as of this axis and to a said tool and/or load applied on the robot and including these, to alone deliver the torques and forces necessary for enabling movements to be carried out by robot parts for fulfilling the function of the robot without any need of any counter-balancing means in connection with this axis. Thus, the present inventors have realized that it is really an option to leave out counter-balancing means in a robot of this type resulting in a number of advantages. The cabling in the region of the first and second axis will be easier to carry out without any obstructing counter-balancing means. The possible movement pattern of the robot will be enlarged, since robot parts will not be stopped in their movement by hitting upon the counter-balancing means. This means that the robot may also be arranged on a shelf for carrying out work close to the level of the base thereof or even lower. Furthermore, the need of maintenance of any counter-balancing means will disappear, and there is no risk of degraded function of the robot as a result of an inappropriate operation of the counter-balancing means. This also means that the industrial robot may be hanged upside down, which due to the gravitation has been out of question for a robot having a counter-balancing means, which opens up for a possibility to arrange robots of this type at a higher density increasing the efficiency of a robot system including several such robots.

According to another embodiment of the invention the industrial robot is adapted to be dressed for spot welding and to carry a said tool in the form of a spot welding gun.

Other preferred features and advantages of the present invention will appear from the following description.

### BRIEF DESCRIPTION OF THE DRAWINGS

With reference to the appended drawings, below follows a specific description of an embodiment of the invention cited as an example.

In the drawings:
- Fig 1: is a schematic view illustrating an industrial robot having a lower arm already known,
- Fig 2: is a perspective view of an industrial robot provided with a lower arm according to an embodiment of the present invention,
- Fig 3: is a side elevation of the lower arm according to the invention of the robot shown in fig 2,
- Fig 4: is an enlarged perspective view of one end of the lower arm shown in fig 3, and
- Fig 5: is a perspective view of the industrial robot according to Fig 2 provided with a spot welding gun.

### DETAILED DESCRIPTION OF AN EMBODIMENT OF THE INVENTION

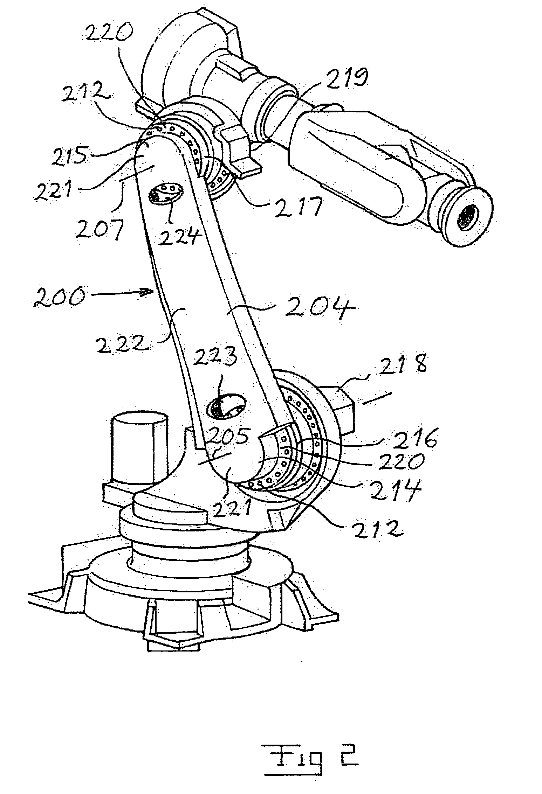

Fig 2 illustrates schematically an industrial robot having a manipulator 200 provided with an arm part in the form of a lower arm according to an embodiment of the present invention, and robot parts corresponding to robot parts of the robot already known an shown in fig 1 have been provided with the same reference numerals with an addition of 200 thereto. It is pointed out that a lower arm according to the invention may be applied to industrial robots having a design being totally different than the one shown in fig 2. The industrial robot according to fig 2 may for instance be dressed for spot welding or load handling. The lower arm 204 is at each end 214, 215 connected to a gear 216, 217 by connecting members in the form of bolts 212. Motors connected to the respective gear for rotation of the respective end of the lower arm about the second axis 205 and the third axis 207 are shown at 218 and 219.

The connecting means further comprises substantially flat arm portions 220 to be secured to the respective gear through said bolts according to an arrangement thereof along a circle on these arm portions. These flat arm portions are arranged at the periphery of the arm at the outer part of the arm with respect to the longitudinal extension of the arm.

The lower arm has at each end thereof stiffening means in the form of a hollow structure 221 surrounded by said flat arm portions 220 at said outer end of the arm. The stiffening means is formed by making the lower arm hollow over substantially the entire length thereof, so that less material may be used for obtaining a predetermined stiffness of the arm than would the arm be solid. Furthermore, the stiffening means formed by the ends of a shell 222 making the arm hollow results in an increased stiffness of the end regions of the arm without increasing the weight thereof or a lighter end region of the lower arm for a predetermined stiffness. An aperture 223, 224 is arranged in the hollow structure at each end of the lower arm 204 for providing access to the bolts 212 located most distant to the end of the arm with respect to the longitudinal extension of the arm, so that it will be possible to tighten and loosen also these bolts.

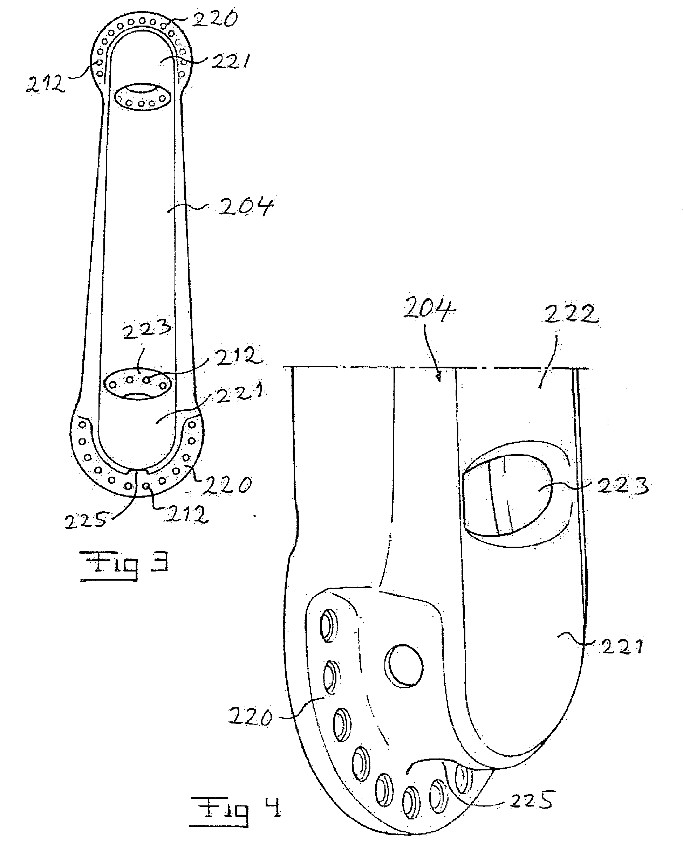

Furthermore, it appears from fig 4 that an opening 225 is also provided at the respective end of the shell 222 for making it possible to remove parts, such as bolts, accidentally lost inside the hollow structure from the interior thereof.

Other advantages of providing the lower arm with a hollow structure of this type are that cabling may easily be hidden inside the arm when dressing the robot, and that the lower arm looks longer than lower arms already known having the same length, which may be an important feature from the aesthetic point of view. The cabling may be led through the second axis 205 and then either inside or outside the lower arm 204 or outside the second axis as well as the lower arm. It may also be led either outside or through the third axis 207 and outside or inside the upper arm.

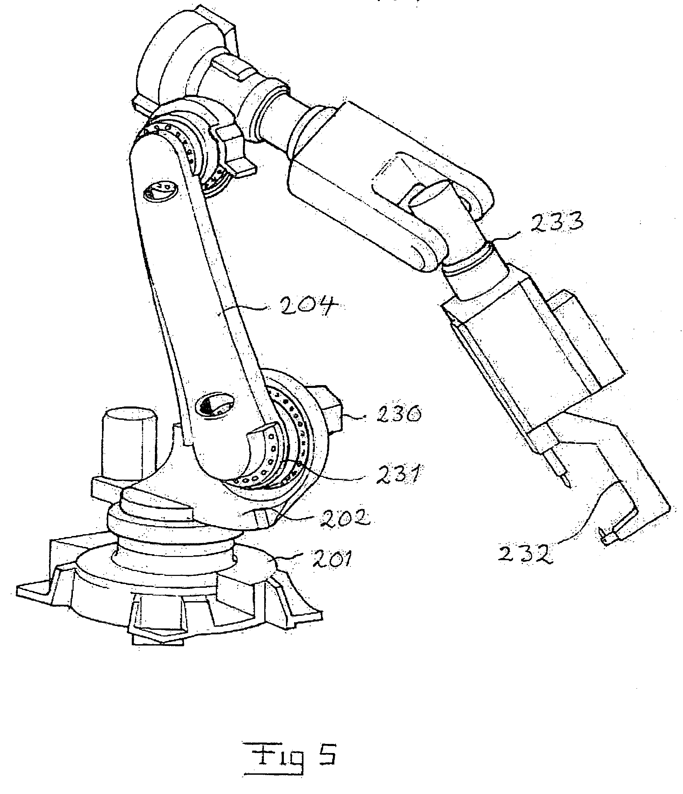

It is illustrated in Fig 5 how an industrial robot provided with a light structure thanks to the design of the lower arm 204 thereof is provided with a spot welding gun 232 secured to the tool flange 233 thereof. This robot is well suited to be used in BiW (Body in White = within the automobile industry) for carrying out spot welding work on a car body. This robot has in spite of the comparatively heavy spot welding gun with a weight in the order of 150 kg, no counter-balancing means, and the motor 230 and the gear box 231 arranged at said second axis 205 are dimensioned to alone deliver the torques and forces necessary for enabling movements to be carried out by robot parts for fulfilling the function of the robot. This dimensioning is done while considering the weight and design of the robot parts as of this axis 205 and to a said tool and/or load applied on the robot and including these. Besides the lower arm also other parts of the robot have been made partly or fully hollow or otherwise designed so as to keep the weight of the robot parts as of the second axis 205 as low as possible. This means that the motor 230 and the gear box 231 have not to be over-dimensioned that much with respect to the case of having a counter-balancing means in a conventional robot for fulfilling the function of the robot. The increased costs of the motor and the gear box are in fact lower than the costs for the counter-balancing means in the form of a gas accumulator.

The invention is of course not in any way restricted to the embodiment described above, but many possibilities to modifications thereof would be apparent to a person with ordinary skill in the art without departing from the scope of the invention as defined in the appended claims.

It is not absolutely necessary to make the stiffening means hollow, although this is an advantage and it is made possible thanks to the change of place of the stiffening means and the connecting means at the respective end of the arm part.

It is neither necessary that both ends of the arm part are provided with stiffening means and connecting means arranged according to the invention, but it is also within the scope of the invention to provide only one end of the arm part therewith.

The apertures in the hollow arm part may be left out and no connecting members be arranged inside the hollow structure or other types of connecting members than bolts, such as magnets, be arranged there.

## Claims

1. An arm part (204) of a manipulator of an industrial robot having at each end thereof means for connecting the arm part to a gear (216, 217) and means for stiffening the end region of the arm part, wherein at at least one of said arm part ends at least a part of said connecting means (212, 220) is located closer to the periphery of the arm part than said stiffening means (221) while at least partly surrounding the stiffening means as seen in the direction of the axis of rotation of said gear, wherein said connecting means comprise though-holes arranged in a flat arm portions for connecting the arm by elongated connecting members, wherein at least a part of said stiffening means (221) is designed as a hollow structure forming a hollow portion of the arm part at said at least one end, and wherein at least one aperture (223, 224) is arranged in the hollow structure of said stiffening means (221) for providing access to said connecting members (212) located most distant to the end of the arm part with respect to the longitudinal extension of the arm part.

2. An arm part according to claim 1, wherein said part (220) of said connecting means has an arc-like extension located at the outer part of the arm part with respect to the longitudinal extension of the arm part and surrounding said stiffening means (221) located internally with respect to said arc.

3. An arm part according to claim 2, wherein said arc-like extension of said connecting means part (220) is circular.

4. An arm part according to any of the preceding claims, wherein said connecting means (220) extends substantially according to a circle as seen in said direction of the axis of rotation of said gear (216), and that said stiffening means (221) is located inside said circle at least at the outer part of the arm part with respect to the longitudinal extension of the arm part.

5. An arm part according to any of the preceding claims, wherein said stiffening means forms together with other portions (222) of the arm part an arm part being hollow over substantially the entire length thereof.

6. An arm part according to any of the preceding claims, wherein both ends of the arm part are provided with connecting means at least a part (220) of which being located closer to the periphery of the arm part than said stiffening means (221) while at least partly surrounding the stiffening means as seen in the direction of the axis of rotation of said gear (216).

7. An arm part according to any of the preceding claims, wherein it is a lower arm (204) an industrial robot.

8. An industrial robot provided with an arm part (204) according to any of claims 1-7.

9. An industrial robot according to claim 8 adapted to carry a tool and/or a load with a weight exceeding 100 kg, wherein the motor (230) and the gear box (231) arranged at the so-called second axis (205) i.e. the horizontal axis closest to the base of the robot when arranging the robot on a horizontal surface, are dimensioned, while considering the weight and design of the robot parts as of this axis and to a said tool and/or load applied on the robot and including these, to alone deliver the torques and forces necessary for enabling movements to be carried out by robot parts for fulfilling the function of the robot without any need of any counter-balancing means in connection with this axis. 13

## Patentansprüche

1. Armteil (204) eines Manipulators eines Industrieroboters, welcher an jedem Ende Mittel zum Verbinden des Armteils mit einem Zahnrad (216, 217) und Mittel zum Versteifen der Endregion des Armteils aufweist, wodurch zumindest an einem der Armteil-Enden mindestens ein Teil der Verbindungsmittel (212, 220) näher an der Peripherie des Armteils angeordnet ist als die Versteifungsmittel (221), während es mindestens teilweise die Versteifungsmittel in der Richtung der Rotationsachse des Zahnrades umgibt, wobei die Verbindungsmittel Durchgangslöcher umfassen, welche in einer ebenen Armposition angeordnet sind, um den Arm durch längliche Verbindungselemente zu verbinden, wodurch mindestens ein Teil der Versteifungsmittel (221) als eine hohle Struktur gestaltet ist, welche einen hohlen Bereich des Armteils an mindestens einem Ende bildet und wodurch mindestens eine Öffnung (223, 224) in der hohlen Struktur des Versteifungsmittels (221) angeordnet ist, um Zugang zu den Verbindungselementen (212), welche am entferntesten zu dem Ende des Armteils in Bezug auf die longitudinale Ausdehnung des Armteils sind, bereitzustellen.

2. Armteil nach Anspruch 1, wobei der Teil (220) der Verbindungsmittel eine bogenartige Verlängerung aufweist, welche an dem äußeren Teil des Armteils in Bezug auf die Längs-Ausdehnung des Armteils angeordnet ist und die Versteifungsmittel (221) umgibt, welche innen in Bezug auf den Bogen angeordnet sind.

3. Armteil nach Anspruch 2, wobei die bogenartige Verlängerung des Verbindungsmittelteils (220) zirkular ist.

4. Armteil nach einem der vorhergehenden Ansprüche, wobei die Verbindungsmittel (220) sich im Wesentlichen gemäß einem Kreis in der Richtung der Rotationsachse des Zahnrads (216) gesehen, erstrecken und dass die Versteifungsmittel (221) innerhalb des Kreises mindestens an dem äußeren Teil des Armteils in Bezug auf die Längsausdehnung des Armteils angeordnet sind.

5. Armteil nach einem der vorhergehenden Ansprüche, wobei das Versteifungsmittel zusammen mit anderen Bereichen (222) des Armteils einen Armteil bilden, welcher hohl über im Wesentlichen seiner gesamten Länge ist.

6. Armteil nach einem der vorhergehenden Ansprüche, wobei beide Enden des Armteils mit Verbindungsmittel bereitgestellt werden, von denen mindestens ein Teil (220) näher an der Peripherie des Armteils angeordnet ist, als die Versteifungsmittel (221), während es mindestens teilweise die Versteifungsmittel in der Richtung der Rotationsachse des Zahnrades (216) gesehen, umgibt.

7. Armteil nach einem der vorhergehenden Ansprüche, wobei es einen unteren Arm (204) eines Industrieroboters darstellt.

8. Industrieroboter, welcher mit einem Armteil (204) gemäß einem der Ansprüche 1-7 bereitgestellt wird.

9. Industrieroboter nach Anspruch 8, welcher angepasst ist, ein Werkzeug und/oder eine Last mit einem Gewicht von mehr als 100 kg zu tragen, wobei der Motor (230) und das Zahnrad-Gehäuse (231), welche an der sogenannten zweiten Achse (205) angeordnet sind, d.h. die horizontale Achse, die am Nächsten an der Basis des Roboters ist, wenn der Roboter an einer horizontalen Oberfläche angeordnet ist, so dimensioniert sind, während das Gewicht und die Gestalt der Roboterteile als auf dieser Achse und auf das Werkzeug und/oder Last berücksichtigt werden, welche an dem Roboter angebracht werden und diesen einschließen, um allein die Drehmomente und Kräfte zu liefern, welche notwendig sind, damit Bewegungen von Roboterteilen ausgeführt werden können, um die Funktion des Roboters ohne jegliche Gegengewichtsmittel in Verbindung mit dieser Achse auszuüben.

## Revendications

1. Partie de bras (204) d'un manipulateur de robot industriel comportant à chacune de ses extrémités un moyen permettant de connecter la partie de bras à un engrenage (216, 217) et un moyen servant à rigidifier la région d'extrémité de la partie de bras, dans laquelle, à au moins l'une desdites extrémités de partie de bras, au moins une partie dudit moyen de connexion (212, 220) est située plus près de la périphérie de la partie de bras que ledit moyen de rigidification (221) tout en entourant au moins partiellement le moyen de rigidification vu dans la direction de l'axe de rotation dudit engrenage, ledit moyen de connexion comprenant des trous traversants disposés dans une portion de bras plate pour connecter le bras par des éléments de connexion allongés, dans laquelle au moins une partie dudit moyen de rigidification (221) est conçue sous la forme d'une structure creuse formant une portion creuse de la partie de bras au moins au niveau de ladite au moins une extrémité, et au moins une ouverture (223, 224) étant disposée dans la structure creuse dudit moyen de rigidification (221) pour permettre l'accès auxdits éléments de connexion (212) les plus distants de l'extrémité de la partie de bras par rapport à l'étendue longitudinale de la partie de bras.

2. Partie de bras selon la revendication 1, dans laquelle ladite partie (220) dudit moyen de connexion a une extension en arc située au niveau de la partie extérieure de la partie de bras par rapport à l'étendue longitudinale de la partie de bras et entourant ledit moyen de rigidification (221) situé à l'intérieur relativement audit arc.

3. Partie de bras selon la revendication 2, dans laquelle ladite extension en arc de ladite partie de moyen de connexion (220) est circulaire.

4. Partie de bras selon l'une quelconque des revendications précédentes, dans laquelle ledit moyen de connexion (220) s'étend substantiellement selon un cercle vu dans ladite direction de l'axe de rotation dudit engrenage (216), et dans laquelle ledit moyen de rigidification (221) est situé à l'intérieur dudit cercle au moins au niveau de la partie extérieure de la partie de bras par rapport à l'étendue longitudinale de la partie de bras.

5. Partie de bras selon l'une quelconque des revendications précédentes, dans laquelle ledit moyen de rigidification forme avec d'autres portions (222) de la partie de bras une partie de bras qui est creuse sensiblement sur toute sa longueur.

6. Partie de bras selon l'une quelconque des revendications précédentes, dans laquelle les deux extrémités de la partie de bras sont pourvues de moyen de connexion dont au moins une partie (220) est plus proche de la périphérie de la partie de bras que ledit moyen de rigidification (221) tout en entourant au moins partiellement le moyen de rigidification vu dans la direction de l'axe de rotation dudit engrenage (216).

7. Partie de bras selon l'une quelconque des revendications précédentes, dans laquelle elle est un bras inférieur (204) d'un robot industriel.

8. Robot industriel pourvu d'un partie de bras (204) selon l'une quelconque des revendications 1 à 7.

9. Robot industriel selon la revendication 8, adapté pour porter un outil et/ou une charge ayant un poids supérieur à 100 kg, dans lequel le moteur (230) et la boîte d'engrenages (231) disposés dans l'axe appelé deuxième axe (205), c.-à-d. l'axe horizontal le plus proche de la base du robot lorsque l'on place le robot sur une surface horizontale, sont dimensionnés, en prenant en compte le poids et la forme des parties de robot relativement à cet axe et à un dit outil et/ou charge appliquée au robot et incluant ceux-ci, pour délivrer à eux seuls les couples et forces nécessaires pour permettre les mouvements devant être exécutés par les parties de robot pour remplir la fonction du robot sans avoir besoin d'un quelconque moyen de contre-équilibrage en connexion avec cet axe.
